# EUROPEAN PATENT APPLICATION

(11) **EP 4 087 295 A1**
(43) Date of publication of application: **09.11.2022**
(21) Application number: 21172220.2
(22) Date of filing: 05.05.2021
(51) Int. Cl.: H04W 4/50, H04W 36/00

(54) **COMMUNICATION NETWORK ARRANGEMENT AND METHOD FOR PROVIDING A COMMUNICATION SERVICE**

(71) Applicant: NTT DoCoMo, Inc., Tokyo 100-6150 (JP)
(72) Inventor: MUTIKAINEN, Jari, 80687 Munich (DE); GUERZONI, Riccardo, 80687 Munich (DE); MINOKUCHI, Atsushi, Tokyo, 100-6150 (JP)
(74) Representative: Viering, Jentschura & Partner mbB Patent- und Rechtsanwälte

(57) **Abstract**

According to one embodiment, a communication network arrangement is described comprising a first user plane component configured to provide a first communication session for a communication service used by a mobile terminal, a first control plane component configured to manage the first communication session and configured to, upon a trigger for a user plane change for the communication service, transmit user plane configuration information to an information relaying component, wherein the user plane configuration information includes information about the provision of the communication service before the user plane change, a second user plane component configured to provide a second communication session for the communication service and a second control plane component configured to manage the second communication session and configured to receive the user plane configuration information from the information relaying component.

## Description

The present disclosure relates to communication network arrangements and methods for providing a communication service.

A main feature of a mobile communication network is the ability to handle movement (i.e. mobility) of mobile terminals. In certain applications, the movement of a mobile terminal which uses a communication service may result in the desire or need to change the user plane components used for providing the communication service to the mobile terminal. This is in particular the case for communication services provided by Edge Computing (EC) since in Edge Computing, it is the aim to serve a mobile terminal with resources which are close to the mobile terminal. However, in certain applications, mobile terminals may be highly mobile while at the same time, it is very important to avoid packet loss (e.g. in communication for platooning of vehicles).

Therefore, approaches are desirable that allow a seamless user plane change, e.g. a user plane change with a low risk of packet loss.

According to one embodiment, a communication network arrangement is provided including a first user plane component configured to provide a first communication session for a communication service used by a mobile terminal, a first control plane component configured to manage the first communication session and configured to, upon a trigger for a user plane change for the communication service, transmit user plane configuration information to an information relaying component, wherein the user plane configuration information includes information about the provision of the communication service before the user plane change, a second user plane component configured to provide a second communication session for the communication service and a second control plane component configured to manage the second communication session and configured to receive the user plane configuration information from the information relaying component.

According to another embodiment, a method for providing a communication service according to the communication network arrangement described above is provided.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- FIG. 1: shows a radio communication system 100, for example configured according to 5G (Fifth Generation) as specified by 3GPP (Third Generation Partnership Project), i.e. for example a 5GS.
- FIG. 2: illustrates a user plane (UP) change due to mobile terminal mobility.
- FIG. 3: shows a message flow diagram illustrating a change of session management function with a UP change.
- FIG. 4: shows a message flow diagram illustrating a transmission of UP configuration information via an Access and Mobility Management Function (AMF) in SSC (Session and Service Continuity) mode SCC#2.
- FIG. 5: shows a message flow diagram 500 illustrating a transmission of UP configuration information via the AMF in SSC (Session and Service Continuity) mode SCC#3.
- FIG. 6: shows a communication network arrangement of a communication network according to an embodiment.
- FIG. 7: shows a flow diagram illustrating a method for providing a communication service.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
Example 1 is a communication network arrangement as described above.
Example 2 is the communication network arrangement of Example 1, including a quality policy requesting component configured to transmit at least a part of the user plane configuration information to the first control plane component, wherein the user plane configuration information specifies a configuration of a user plane component for providing a communication session for the communication service after a user plane change.
Example 3 is the communication network arrangement of Example 2, wherein the second control plane component is configured to control the second user plane component according to the user plane configuration information.
Example 4 is the communication network arrangement of Example 2 or 3, wherein the quality policy requesting component is configured to request support of a quality of service policy for the communication service.
Example 5 is the communication network arrangement of any one of Examples 2 to 4, wherein the user plane configuration information includes an indication that uplink traffic should be buffered by the second user plane component until a receiver of the second user plane component is ready to receive the uplink traffic.
Example 6 is the communication network arrangement of any one of Examples 2 to 5, wherein the user plane configuration information includes an identification of the quality policy requesting component.
Example 7 is the communication network arrangement of any one of Examples 2 to 6, wherein the user plane configuration information includes the information that the first control plane component has notified the quality policy requesting component that a user plane change is going to be performed.
Example 8 is the communication network arrangement of any one of Examples 2 to 7, wherein the quality policy requesting component is an application function.
Example 9 is the communication network arrangement of any one of Examples 1 to 8, wherein the
   relaying component is a memory, wherein the first control plane component is configured to transmit an identifier of the memory to the second control plane component and wherein the second control plane component is configured to retrieve the user plane configuration information from the memory using the identifier.
Example 10 is the communication network arrangement of any one of Examples 1 to 9, wherein the first control plane component is configured to transmit the identifier of the memory to the second control plane component via the mobile terminal or via a further control plane component serving the mobile terminal.
Example 11 is the communication network arrangement of Example 10, wherein the further control plane component is an Access and Mobility Management Function.
Example 12 is the communication network arrangement of any one of Examples 9 to 11, wherein the memory is a memory of a device implementing the first control plane component.
Example 13 is the communication network arrangement of any one of Examples 1 to 12, wherein the user plane configuration information includes an indication that a policy control component for controlling a policy for the communication session has changed with the user plane change.
Example 14 is the communication network arrangement of any one of Examples 1 to 13, wherein the user plane configuration information includes an indication that one or more components of the communication network should be informed that a policy control component for controlling a policy for the communication session has changed with the user plane change.
Example 15 is the communication network arrangement of any one of Examples 1 to 14, wherein the first control plane component and the second control plane components are session management functions.
Example 16 is the communication network arrangement of any one of Examples 1 to 15, including the information relaying component, wherein the information relaying component is a third control plane component configured to request establishment of the second communication session.
Example 17 is the communication network arrangement of Example 16, wherein the third control plane component is configured to include the user plane configuration information in a request message to request establishment of the second communication session transmitted to the second control plane component.
Example 18 is the communication network arrangement of Example 16 or 17, wherein the information relaying component is an Access and Mobility Management Function serving the mobile terminal.
Example 19 is the communication network arrangement of any one of Examples 1 to 15, including the information relaying component, wherein the information relaying component is the mobile terminal.
Example 20 is the communication network arrangement of Example 19, wherein the mobile terminal is configured to include the user plane configuration information in a request message to request establishment of the second communication session transmitted to the second control plane component.
Example 21 is the communication network arrangement of any one of Examples 1 to 20, wherein the first control plane component is configured to initiate that the first user plane component stops providing the first communication session before the second user plane component has started providing the second communication session or after the second user plane component has started providing the second communication session.
Example 22 is the communication network arrangement of any one of Examples 1 to 21, wherein the trigger for the user plane change is a trigger for a change of the user plane component providing a communication session for the communication service for the mobile terminal.
Example 23 is a method for providing a communication service including providing a first communication session for a communication service used by a mobile terminal by a first user plane component, managing the first communication session by a first control plane component, upon a trigger for a user plane change for the communication service, transmitting user plane configuration information from the first control plane component to an information relaying component, wherein the user plane configuration information includes information about the provision of the communication service before the user plane change;
   providing a second communication session for the communication service by a second user plane component, managing the second communication session by a second control plane component and receiving, by the second control plane component, the user plane configuration information from the information relaying component.

It should be noted that one or more of the features of any of the examples above may be combined with any one of the other examples. In particular, the Examples described in context of the device are analogously valid for the method.

According to further embodiments, a computer program and a computer readable medium including instructions, which, when executed by a computer, make the computer perform the method of any one of the above Examples are provided.

In the following, various examples will be described in more detail.

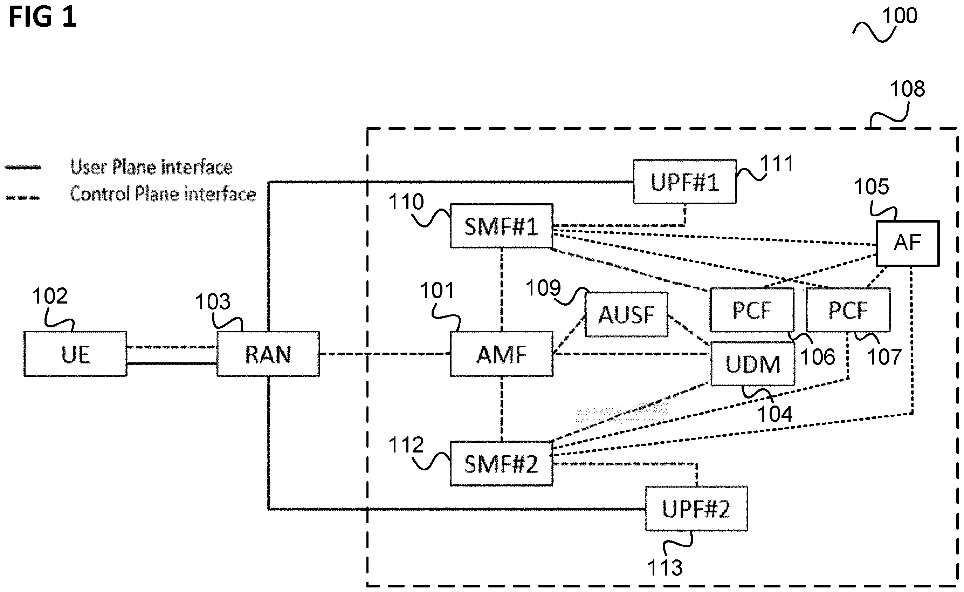

FIG. 1 shows a radio communication system 100, for example configured according to 5G (Fifth Generation) as specified by 3GPP (Third Generation Partnership Project), i.e. for example a 5GS.

The radio communication system 100 includes a mobile radio terminal device 102 such as a UE (user equipment), a nano equipment (NE), and the like. The mobile radio terminal device 102, also referred to as subscriber terminal, forms the terminal side while the other components of the radio communication system 100 described in the following are part of the mobile radio communication network side, i.e. part of a mobile radio communication network (e.g. a Public Land Mobile Network PLMN).

Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another mobile radio communication standard but 5G is herein used as an example. Each radio access network node 103 may provide a radio communication with the mobile radio terminal device 102 over an air interface. It should be noted that the radio access network 103 may include any number of radio access network nodes.

The radio communication system 100 further includes a core network (5GC) 108 including an Access and Mobility Management Function (AMF) 101 connected to the RAN 103 and a Unified Data Management (UDM) 104. Here and in the following examples, the UDM may further consist of the actual UE's subscription database, which is known as, for example, the UDR (Unified Data Repository). The core network 108 further includes an AUSF (Authentication Server Function) 109 and one or more PCFs (Policy Control Functions), in this example a first PCF 106 and a second PCF 107.

The core network 108 further includes multiple Session Management Functions (SMFs), in this example a first Session Management Function (SMF) 110 and a second Session Management Function (SMF) 112 and multiple User Plane Functions (UPFs), in this example a first User Plane Function (UPF) 111a second User Plane Function (UPF) 113. The SMFs 110, 112 are for handling PDU (Protocol Data Unit) sessions, i.e. for creating, updating and removing PDU sessions and managing session context with the User Plane Function (UPF).

The core network 108 further includes an application function (AF) 105. The AF 105 is shown to be directly connected to the SMFs 110, 112 and PCFs 106, 107 but may also be connected to them via an NEF (Network Exposure Function), in particular in case the AF 105 is maintained by a third party (i.e. a party other than the operation of the mobile radio communication system 100.

The AF 105 enables an application to request the 5G system 100 to support specific QoS (Quality of Service) policies for a UE 102 that establishes a PDU session to provide a communication service for that application.

In 3GPP Release 17 (Rel-17), AF influence is also used by the application layer to influence the URSP (UE Route Selection Policy) rules provided to the UE 102 to support application based on Edge Computing (EC).

In Edge Computing, in particular, it is desirable that computational resources stay close to a UE. Therefore, when the UE 102 has an established PDU session to use a communication service and moves, the UPF 111, 113 (and the PDU session) may change.

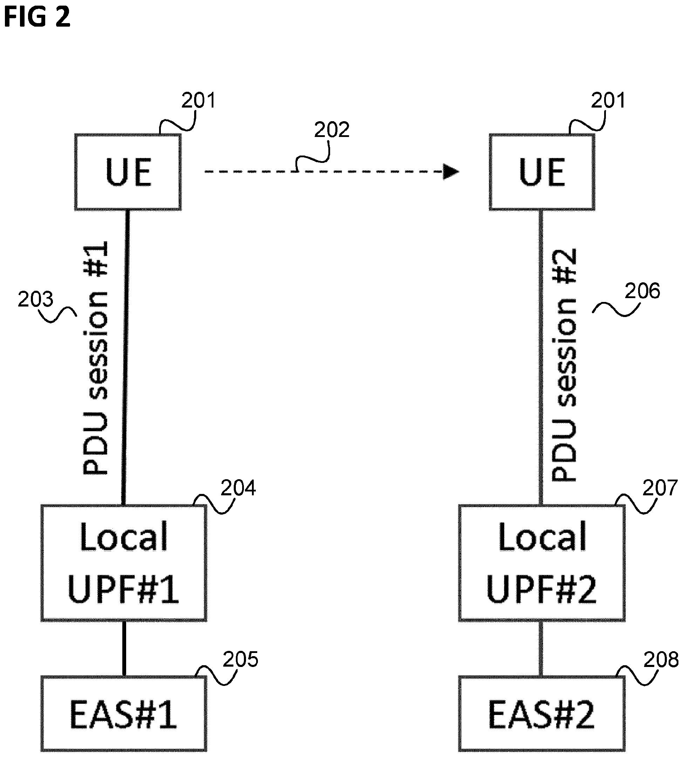

FIG. 2 illustrates a UP change due to mobile terminal mobility.

A UE 201 (e.g. corresponding to UE 102) moves from a first location to a second location as illustrated by arrow 202. In the first location, the UE has a first PDU session 203 by means of a first UPF 204, for example to communicate (via the first UPF 204) with a first Edge Application Server 205 to use a communication service.

The movement of the UE 201 to the second location triggers a UP change. This means that when the UE 201 has moved, the UE has a second PDU session 206 provided by a second UPF 207 to communicate (via the second UPF 207) with a second Edge Application server 208 to use the communication service.

The 5G technique SSC (Session and Service Continuity) allows the provider of the communication service to set a specific SSC mode for a given PDU Session, which in turn will determine the flow of packets across the network in mobility scenarios (like in the example of FIG. 2).

The SSC modes SSC#2 and SSC#3 apply to EC-based mission critical applications (e.g. automotive applications like platooning). The UE 201 can:
- In SSC#3: establish connectivity (i.e. the second PDU session 206) to the second UPF 207 before dropping the connectivity (i.e. the first PDU session 203) to the first UPF 204
- In SSC#2: establish connectivity (i.e. the second PDU session 206) to the second UPF 207 immediately after dropping the connectivity (i.e. the first PDU session 203) to the first UPF 204.

During a user plane change (i.e. a change of UPFs 111, 113 as in FIG. 2), the SMF 110, 112 managing the PDU sessions 203, 206 exchanges notifications with the AF 105 and stores information provided by the AF to synchronize a UP change in the 5GS (e.g. in case of a EAS (Edge Application Server) relocation at the application layer as illustrated in FIG. 2).

However, in SSC modes SSC#2 and SSC#3, the SMF may also change with the UP change. For example, the respective AMF 101 may select a new SMF.

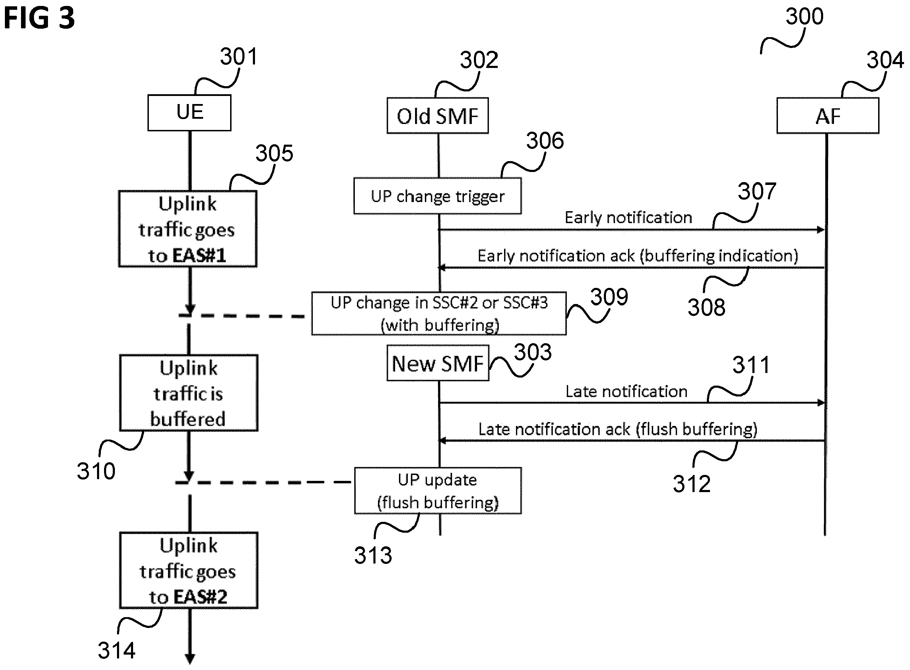

FIG. 3 shows a message flow diagram 300 illustrating a change of SMF with a UP change.

A UE 301, e.g. corresponding to UE 201, a first SMF 302, a second SMF 303 and an AF 304 are involved in the flow.

The UE 301 generates uplink traffic, which, before the UP change, goes, in 305, to the first Edge Application Server 205. When there is a trigger for a change of UP in 306, the first SMF 302 sends, in 307, an early notification (e.g. an NsmfEventExposureNotification) to the AF 304.

In 308, the AF 304 responds with an early notification acknowledgement, in which, in this example, it indicates that uplink data should be buffered (because the second Edge Application Server 208 might not be immediately ready to receive the uplink data after the UP change).

In 309, the first SMF 302 performs the UP change. This in particular includes that it initiates that the uplink traffic is buffered in 310 (in the second UPF 207, i.e. the target UPF 207).

It is assumed that the SMF changes with the UP change. This means that the second PDU session 206 is managed by the second SMF 303.

In 311, the second SMF 303 sends a late notification to the AF 304 to inform the AF 304 that the UP change has been completed and in 312, the AF 304 acknowledges and instructs the second SMF 303 to initiate that the buffer is flushed and buffering is stopped.

In 313, the second SMF 303 updates the user plane accordingly to flush the buffer and stop buffering.

Accordingly, in 314, the uplink traffic goes through the second UPF 208 to the second Edge Application Server 208.

According to various embodiments, it is ensured that the second SMF 303 has the necessary information to carry out (or complete) a UP change with a change of SMFs as in the example of FIG. 3 (and as it may occur for SSC modes SSC#2 and SSC#3). This kind of information is herein referred to as UP configuration information and may at least in part be information provided by the AF 304.

In particular, it is ensured that the UP configuration information provided by the AF 304 to the first SMF 302 in 308 is transferred from the first SMF 302 to the second SMF 303.

This allows features to support EC (e.g. buffering in the target UPF as in the example of FIG. 3) to work in SSC modes SSC#2 and SSC#3. For example, the UP configuration information includes the information that the AF 304 has instructed that buffering is to be performed allowing the second SMF 303 to act accordingly. This in particular allows avoiding packet loss which is important for support of applications that require low packet loss such as mission critical automotive applications (e.g. platooning) or industrial applications (e.g. stop button for machinery).

According to various embodiments, the first SMF 302 transfers the UP configuration information to the AMF 101 before the UP change and the AMF 101 then transfers the UP configuration information to the second SMF 303.

Alternatively, the first SMF 302 transfers the UP configuration information to the UE 301 before the UP change and the UE 301 then transfers the UP configuration information to the second SMF 303.

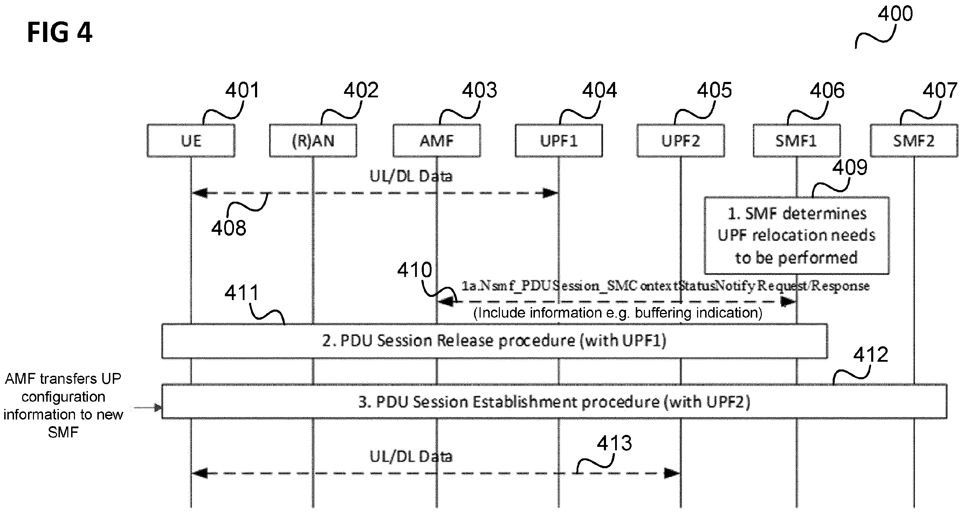

FIG. 4 shows a message flow diagram 400 illustrating a transmission of UP configuration information via the AMF in SSC mode SCC#2.

The message flow takes place between a UE 401, e.g. corresponding to UE 301, a RAN 402, an AMF 403, a first UPF 404, a second UPF 405, a first SMF 406 (e.g. corresponding to the first SMF 302) and a second SMF (target SMF) 407 (e.g. corresponding to second SMF 303).

Before the UP change, the UE 401 exchanges uplink and downlink data with the first UPF 404 in 408. This is done by a first PDU session which is managed by the first SMF 405.

It is assumed that in 409, the first SMF 405 determines that a UPF relocation (e.g. a UP change) should be performed.

Accordingly, in 410, the first SMF 406 sends a Nsmf_PDUSession_SMContextNotifyRequest message to the AMF 403 to inform the AMF 403 that the first PDU Session is going to be released and the AMF 403 acknowledges with a Nsmf_PDUSession_SMContextNotifyResponse message.

In 411, the first PDU session is released.

In 412, a second PDU session is established. The second PDU session is provided by the second UPF 405 to the UE 401.

In 413, the UE 401 starts exchanging uplink and downlink data with the second UPF 405 via the second PDU session.

As explained, as part of 412, the AMF 403 may select a new SMF, in this example the second SMF 407, for managing the second PDU session and UP configuration information is passed to the second SMF 407. The UP configuration information for example includes the information
- whether a buffering indication was received by the first SMF 406 (from a respective AF);
- whether the first SMF 406 has sent an early notification (to the AF)
- the source DNAI (Data Network Access Identifier) from which the UE 401 is moving to the target DNAI.

For passing the UP configuration information to the second SMF 407, the first SMF 406 includes the UP configuration information into the Nsmf_PDUSession_SMContextNotifyRequest message to the AMF 403 in 410.

The AMF 403 may then communicate the UP configuration information to the second SMF 406 in 412, for example by including it into a Nsmf_PDUSession_CreateSMContext Request message that it sends to the second SMF 406 to request establishment of the second PDU session.

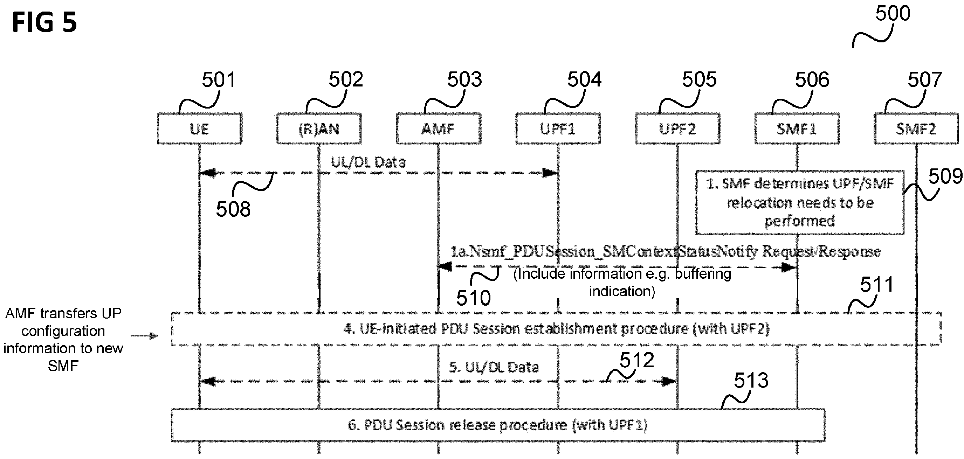

FIG. 5 shows a message flow diagram 500 illustrating a transmission of UP configuration information via the AMF in SSC mode SCC#3.

The message flow takes place between a UE 501, e.g. corresponding to UE 301, a RAN 502, an AMF 503, a first UPF 504, a second UPF 505, a first SMF 506 (e.g. corresponding to the first SMF 302) and a second SMF (target SMF) 507 (e.g. corresponding to second SMF 303).

Before the UP change, the UE 501 exchanges uplink and downlink data with the first UPF 504 in 508. This is done by a first PDU session which is managed by the first SMF 505.

It is assumed that in 509, the first SMF 505 determines that a UPF relocation (e.g. a UP change) should be performed.

Accordingly, in 510, the first SMF 506 sends a Nsmf_PDUSession_SMContextNotifyRequest message to the AMF 503 to inform the AMF 503 that the first PDU Session is going to be released and the AMF 503 acknowledges with a Nsmf_PDUSession_SMContextNotifyResponse message.

In 511, a second PDU session is established. The second PDU session is provided by the second UPF 505 to the UE 501.

In 512, the UE 501 starts exchanging uplink and downlink data with the second UPF 505 via the second PDU session.

In 513, the first PDU session is released.

As explained, as part of 511, the AMF 503 may select a new SMF, in this example the second SMF 507, for managing the second PDU session and UP configuration information is passed to the second SMF 507.

For passing the UP configuration information to the second SMF 507, the first SMF 506 includes the UP configuration information into the Nsmf_PDUSession_SMContextNotifyRequest message to the AMF 503 in 510.

The AMF 503 may then communicate the UP configuration information to the second SMF 506 in 511, for example by including it into a Nsmf_PDUSession_CreateSMContext Request message that it sends to the second SMF 506 to request establishment of the second PDU session.

Alternatively to the information transfer via the AMF 403 in SSC mode SSC#2, the first SMF 406 may include the UP configuration information into a PDU Session Release Command and send it to UE 401 (via the AMF 403, e.g. between 410 and 411). The UE 401 may then include the UP configuration information when establishing the second PDU session to the second SMF 407 in 412.

Alternatively to the information transfer via the AMF 503 in SSC mode SSC#3, the first SMF 506 may include the UP configuration information into a PDU Session Modification Command and send it to UE 501 (via the AMF 503, e.g. between 510 and 511). The UE 501 may then include the UP configuration information when establishing the second PDU session to the second SMF 507 in 511.

According to another embodiment, the first SMF 406, 506 stores the UP configuration information in a persistent storage location, which remains available also after the first PDU session has been released. The first SMF 406, 506 may then send to the AMF 403, 503 an identifier of the storage location from where the second SMF 407, 507 can get the UP configuration information stored by the first SMF 406, 506. During the establishment of the second PDU session (in 412 or 511), the AMF 403, 503 provides the identifier of the storage location to the second SMF 407, 507. The second SMF 407, 507 then retrieves the UP configuration information from the storage location. This approach may in particular be used in SSC mode SSC#2.

For SSC mode SSC#3, the first SMF 506 may also send to the AMF 503 an identifier of the first SMF 506 from where the second SMF 507 can get the UP configuration information (stored by the first SMF 506). The identifier of the first SMF 506 may be an identifier of a Session Management Context stored in the first SMF 506, the Session Management Context including at least one AF coordination information (e.g. whether a buffering indication was received by the first SMF 506). During the establishment of the second PDU session (in 511), the AMF 503 provides the identifier to the second SMF 507. The second SMF 507 then retrieves the UP configuration information from the first SMF 506. This approach may in particular be used in SSC mode SSC#3.

The UP configuration information (that should or needs to be transferred from the source SMF to the target SMF) for example includes
- Notification URI (of the AF) and correlation ID (in case the PCF also changes)
- The following information (per Notification correlation ID):
   - The source DNAI
   - UE source DNAI IP address
   - Indication that an early notification has been sent
   - Indication that a buffering indication was received
   - Indication that a PCF change event is required (in case the PCF also has changed)

The Notification correlation ID is an identifier of the notification from the SMF to the AF; the AF includes it when sending a message to the SMF related to that notification.

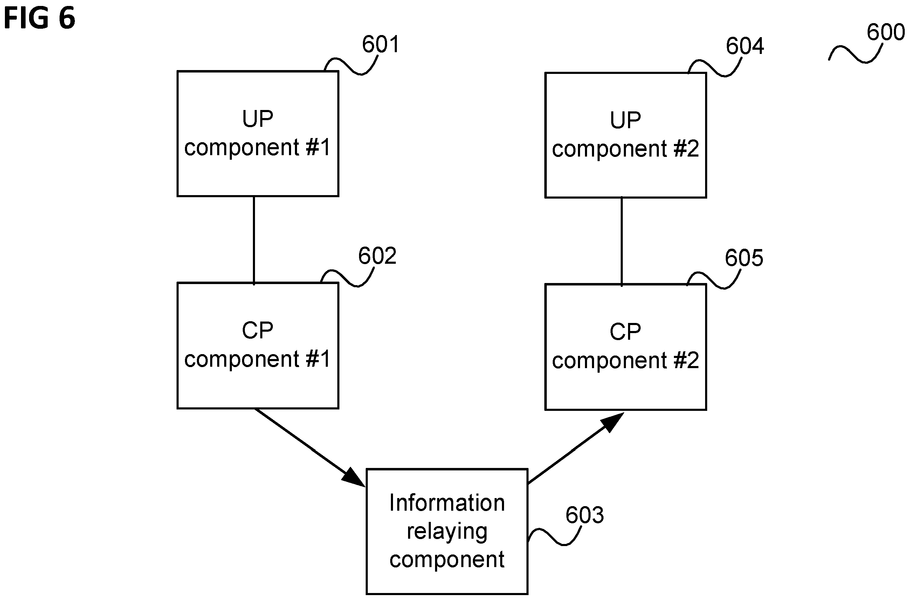

In summary, according to various embodiments, a communication network arrangement is provided as illustrated in FIG. 6.

FIG. 6 shows a communication network arrangement 600 of a communication network according to an embodiment.

The communication network arrangement 600 includes a first user plane component 601 configured to provide a first communication session for a communication service used by a mobile terminal and a first control plane component 602 configured to manage the first communication session and configured to, upon a trigger for a user plane change for the communication service, transmit user plane configuration information to an information relaying component 603, wherein the user plane configuration information includes information about the provision of the communication service before the user plane change.

The communication network arrangement 600 further includes a second user plane component 604 configured to (in reaction or in response to the trigger for the user plane change) provide a second communication session for the communication service and a second control plane component 605 configured to manage the second communication session and configured to receive (e.g. obtain or retrieve) the user plane configuration information from the information relaying component 603.

According to various embodiments, in other words, a control plane component (or entity or function) which manages a communication session for providing a communication service for a mobile terminal uses a middle entity to relay information to a target control plane component which manages a (new) communication session for providing the communication service to the mobile terminal. The information is for example information the target control plane component needs to know to be able to continue the communication service (at least without impact on the quality, e.g. without packet loss) after the user plane change (i.e., in other words, to complete the user plane change successfully). For example, the provision of the communication service involves a transaction with an application function (i.e. generally a component which requests a certain quality policy for the communication service) and the information is information required to complete the transaction with the application function or information to complete the user plane change.

The user plane (UP) configuration information is information about the provision of the communication service before the user plane change, i.e. about the provision of the communication service by means of the first communication session, e.g. information communicated between the first control plane component with the application function (generally the component which requests a certain quality policy for the communication service) or information about the source DNAI (Data Network Access Identifier), i.e. the DNAI that was used for the provision of the communication service before the UP change or whether the PCF (generally policy control component) which controlled the policy for the communication service before the UP change was a different one than the PCF which controls the policy for the communication service after the UP change.

The communication service is for example a communication service where packet loss should be avoided, e.g. a communication service for exchanging control data for robotic devices or machinery, e.g. for platooning of vehicles or controlling industrial machines. It may be a communication service provided Edge Computing (EC), i.e. one or more EASs (Edge Application Servers). The trigger for the user plane change may be a change of location of the mobile terminal (which may in particular result in a change of EAS providing the communication service).

The information relaying component may be part of the communication network arrangement and may be configured to transmit the user plane configuration information to the second control plane component. The information relaying component may for example be configured to (actively) provide the user plane configuration information to the second control plane component.

The user plane configuration information may for example includes communication session management information for continuation of the communication service by means of a different communication session.

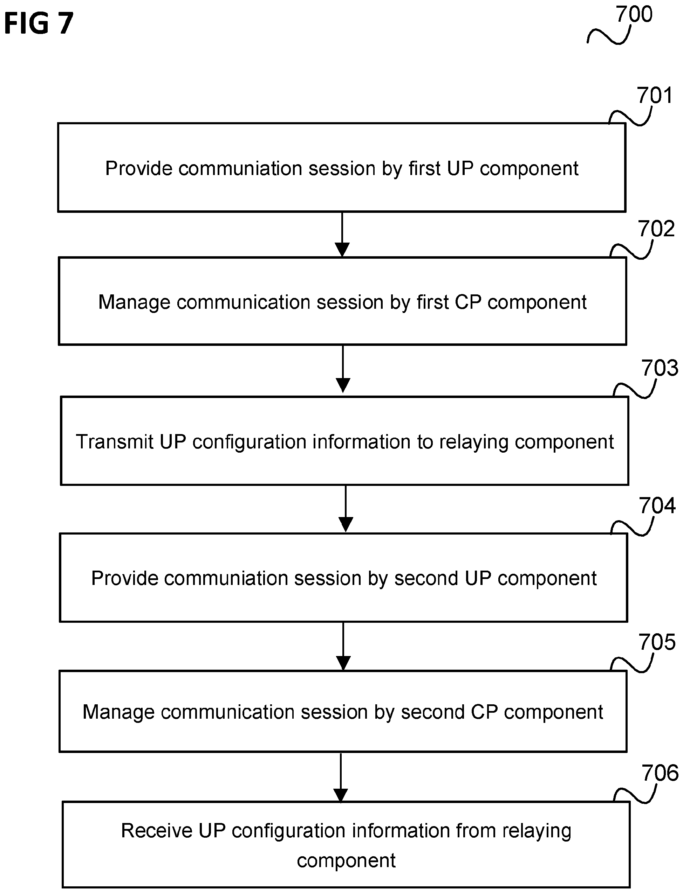

A communication network (or system) for example carries out a method as illustrated in FIG. 7.

FIG. 7 shows a flow diagram 700 illustrating a method for providing a communication service.

In 701, a first communication session is provided by a first user plane component for a communication service used by a mobile terminal.

In 702, the first communication session is managed by a first control plane component.

In 703, upon a trigger for a user plane change for the communication service, user plane configuration information is transmitted from the first control plane component to an information relaying component, wherein the user plane configuration information includes information about the provision of the communication service before the user plane change.

In 704, a second communication session is provided by a second user plane component for the communication service.

In 705, the second communication session is managed by a second control plane component.

In 706, the second control plane component receives the user plane configuration information from the information relaying component.

It should be noted that the operations of the method of FIG. 7 do not need to be performed strictly in the order shown. In particular, a session is managed while it is provided and both sessions may be provided (and managed) in parallel (e.g. shortly after the user plane change).

The components of the communication network arrangement may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A communication network arrangement of a communication network comprising:
a first user plane component configured to provide a first communication session for a communication service used by a mobile terminal;
a first control plane component configured to manage the first communication session and configured to, upon a trigger for a user plane change for the communication service, transmit user plane configuration information to an information relaying component, wherein the user plane configuration information includes information about the provision of the communication service before the user plane change;
a second user plane component configured to provide a second communication session for the communication service; and
a second control plane component configured to manage the second communication session and configured to receive the user plane configuration information from the information relaying component.

2. The communication network arrangement of claim 1, comprising a quality policy requesting component configured to transmit at least a part of the user plane configuration information to the first control plane component, wherein the user plane configuration information specifies a configuration of a user plane component for providing a communication session for the communication service after a user plane change.

3. The communication network arrangement of claim 2, wherein the second control plane component is configured to control the second user plane component according to the user plane configuration information.

4. The communication network arrangement of claim 2 or 3, wherein the quality policy requesting component is configured to request support of a quality of service policy for the communication service.

5. The communication network arrangement of any one of claims 2 to 4, wherein the user plane configuration information comprises an indication that uplink traffic should be buffered by the second user plane component until a receiver of the second user plane component is ready to receive the uplink traffic.

6. The communication network arrangement of any one of claims 2 to 5, wherein the quality policy requesting component is an application function.

7. The communication network arrangement of any one of claims 1 to 6, wherein the relaying component is a memory, wherein the first control plane component is configured to transmit an identifier of the memory to the second control plane component and wherein the second control plane component is configured to retrieve the user plane configuration information from the memory using the identifier.

8. The communication network arrangement of any one of claims 1 to 7, wherein the first control plane component is configured to transmit the identifier of the memory to the second control plane component via the mobile terminal or via a further control plane component serving the mobile terminal.

9. The communication network arrangement of claim 8, wherein the further control plane component is an Access and Mobility Management Function.

10. The communication network arrangement of any one of claims 7 to 9, wherein the memory is a memory of a device implementing the first control plane component.

11. The communication network arrangement of any one of claims 1 to 10, wherein the first control plane component and the second control plane components are session management functions.

12. The communication network arrangement of claim 11, wherein the third control plane component is configured to include the user plane configuration information in a request message to request establishment of the second communication session transmitted to the second control plane component.

13. The communication network arrangement of claim 11 or 12, wherein the information relaying component is an Access and Mobility Management Function serving the mobile terminal.

14. The communication network arrangement of any one of claims 1 to 13, comprising the information relaying component, wherein the information relaying component is the mobile terminal.

15. A method for providing a communication service comprising:
providing a first communication session for a communication service used by a mobile terminal by a first user plane component;
managing the first communication session by a first control plane component;
upon a trigger for a user plane change for the communication service, transmitting user plane configuration information from the first control plane component to an information relaying component, wherein the user plane configuration information includes information about the provision of the communication service before the user plane change;
providing a second communication session for the communication service by a second user plane component;
managing the second communication session by a second control plane component; and
receiving, by the second control plane component, the user plane configuration information from the information relaying component.

## Amended claims

### Amended claims in accordance with Rule 137(2) EPC.

1. A communication network arrangement (100) of a communication network comprising:
a first user plane component (601, 111, 204)) configured to provide a first communication session (203) for a communication service used by a mobile terminal (102, 201);
a first control plane (602, 110) component configured to manage the first communication session (203) and configured to, upon a trigger for a user plane change for the communication service, transmit user plane configuration information to an information relaying component (603, 101), wherein the user plane configuration information includes information about the provision of the communication service before the user plane change;
a second user plane component (604, 113, 207) configured to provide a second communication session (206) for the communication service; and
a second control plane component (605, 112) configured to manage the second communication session (206) and configured to receive the user plane configuration information from the information relaying component (603, 101);
wherein the information relaying component (603, 101) is a third control plane component configured to request the establishment of the second communication session.

2. The communication network arrangement (100) of claim 1, comprising a quality policy requesting component (105, 304, 407, 507) configured to transmit at least a part of the user plane configuration information to the first control plane component (602, 110), wherein the user plane configuration information specifies a configuration of a user plane component for providing a communication session for the communication service after a user plane change.

3. The communication network arrangement (100) of claim 2, wherein the second control plane component (605, 112) is configured to control the second user plane component (604, 113, 207) according to the user plane configuration information.

4. The communication network arrangement (100) of claim 2 or 3, wherein the quality policy requesting component (105, 304, 407, 507) is configured to request support of a quality of service policy for the communication service (106, 107).

5. The communication network arrangement (300, 100) of any one of claims 2 to 4, wherein the user plane configuration information comprises an indication (308) that uplink traffic should be buffered by the second user plane component (303, 604) until a receiver of the second user plane component (208) is ready to receive the uplink traffic (314).

6. The communication network arrangement (100) of any one of claims 2 to 5, wherein the quality policy requesting component is an application function (105, 304, 407, 507).

7. The communication network arrangement (100) of any one of claims 1 to 6, wherein the relaying component (603) is a memory (101, 102), wherein the first control plane component (302, 602, 110) is configured to transmit an identifier of the memory (101, 102) to the second control plane component (605, 112) and wherein the second control plane component is configured to retrieve the user plane configuration information from the memory (101, 102) using the identifier.

8. The communication network arrangement (100) of claim 7, wherein the first control plane component (602, 110) is configured to transmit the identifier of the memory (101, 102) to the second control plane component (605, 112) via the mobile terminal (102) or via a further control plane component (101) serving the mobile terminal.

9. The communication network arrangement (100) of claim 8, wherein the further control plane component is an Access and Mobility Management Function (101).

10. The communication network arrangement (100) of any one of claims 7 to 9, wherein the memory is a memory of a device implementing the first control plane component (602).

11. The communication network arrangement (100) of any one of claims 1 to 10, wherein the first control plane component (602) and the second control plane components (605) are session management functions.

12. The communication network arrangement (100, 400, 500) of claim 11, wherein the third control plane component (403, 503) is configured to include the user plane configuration information in a request message to request establishment of the second communication session (412, 511) transmitted to the second control plane component (407, 507).

13. The communication network arrangement (100) of claim 11 or 12, wherein the information relaying component (603) is an Access and Mobility Management (101) Function serving the mobile terminal (102).

14. The communication network arrangement (100) of any one of claims 1 to 13, comprising the information relaying component (603), wherein the information relaying component is the mobile terminal (102).

15. A method (700) for providing a communication service comprising:
providing a first communication session (203) for a communication service used by a mobile terminal by a first user plane component (111);
managing the first communication session (203) by a first control plane component (110, 601);
upon a trigger for a user plane change for the communication service, transmitting user plane configuration information from the first control plane component (110, 602) to an information relaying component (101, 603), wherein the user plane configuration information includes information about the provision of the communication service before the user plane change;
providing a second communication session (206) for the communication service by a second user plane component (207, 113);
managing the second communication session (206) by a second control plane component (112); and receiving, by the second control plane component, the user plane configuration information from the information relaying component(603, 101);
wherein the information relaying component is a third control plane component configured to request establishment of the second communication session.
